# EUROPEAN PATENT SPECIFICATION

(11) **EP 0 360 978 B1**
(45) Date of publication and mention of the grant of the patent: **14.12.1994**
(21) Application number: 89109688.5
(22) Date of filing: 30.05.1989
(51) Int. Cl.: G11B 5/127, G11B 5/31

(54) **A thin film magnetic head for perpendicular recording and reproducing**
Dünnfilm-Magnetkopf für senkrechte Aufzeichnung und Wiedergabe
Tête magnétique à film mince pour enregistrement et reproduction perpendiculaire

(30) Priority: 27.09.1988 JP 242887/88
(43) Date of publication of application: 04.04.1990
(73) Proprietor: FUJITSU LIMITED, Kawasaki-shi, Kanagawa 211 (JP)
(72) Inventor: Kanamine, Michiaki c/o FUJITSU LIMITED, Kawasaki-shi Kanagawa 211 (JP); Koshikawa, Takao c/o FUJITSU LIMITED, Kawasaki-shi Kanagawa 211 (JP)
(74) Representative: Sunderland, James Harry

(56) References cited:
- GB-A- 2 149 186
- US-A- 4 404 609
- PATENT ABSTRACTS OF JAPAN, vol. 12, no. 140 (P-696)[2987], 28th April 1988;& JP-A-62 262 212 (MATSUSHITA ELECTRIC IND. CO., LTD) 14-11-1987
- PATENT ABSTRACTS OF JAPAN, vol. 12, no. 220 (P-720)[3067], 23rd June 1988;& JP-A-63 016 402 (NIPPON HOSO KYOKAI) 23-01-1988
- PATENT ABSTRACTS OF JAPAN, vol. 11, no. 219 (P-596)[2666], 16th July 1987;& JP-A-62 036 714 (MITSUBISHI ELECTRIC CORP.) 17-02-1987
- PATENT ABSTRACTS OF JAPAN, vol. 11, no. 66 (P-552)[2513], 27th February 1987;& JP-A-61 229 221 (FUJITSU LTD) 13-10-1986
- PATENT ABSTRACTS OF JAPAN, vol. 5, no. 161 (P-84)[833], 16th October 1981;& JP-A-56 093 111 (NIPPON DENKI K.K.) 28-07-1981
- PATENT ABSTRACTS OF JAPAN, vol. 12, no. 406 (P-777)[3253], 27th October 1988;& JP-A-63 144 403 (OLYMPUS OPTICAL) 16-06-1988

## Description

The present invention relates to a thin film magnetic head for perpendicular recording information on and reproducing information from a magnetic medium.

Magnetic heads for perpendicular recording fall roughly into two groups, one group including heads of a type known as the auxiliary pole excitation type and the other group including heads of a type known as the main pole excitation type.

The former type has a disadvantage in that it is necessary to dispose an auxiliary pole having an excitation coil on a back side of a recording medium, with the result that inductance of the excitation coil becomes high and a large distance between a main pole and the auxiliary pole reduces recording and reproducing efficiencies.

On the other hand, in magnetic heads of the latter type, both a main magnetic pole and an excitation coil are disposed on the same, front side of a recording medium. Therefore, efficiency with which the recording medium is magnetised is unrelated to thickness thereof. Various design configurations have been proposed for thin film magnetic heads of the main pole excitation type, for perpendicular recording and reproducing.

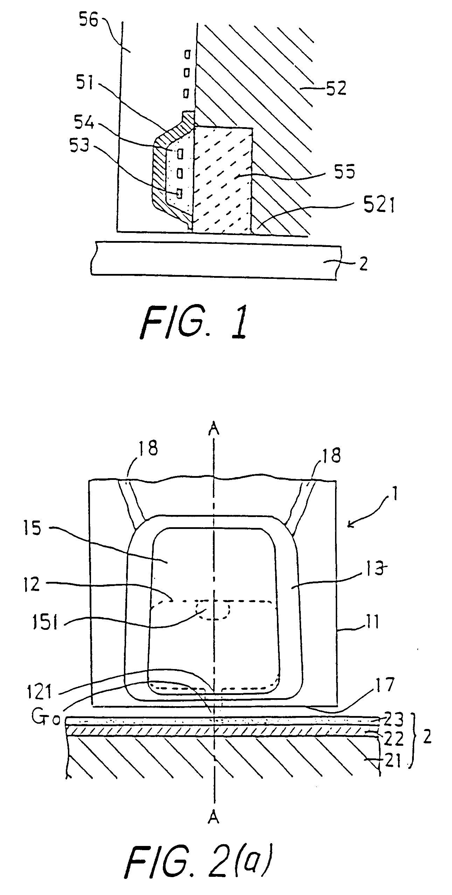

An example is disclosed in the Japanese Unexamined Patent Publication "SHO-55-4730", laid-open on 14th January 1980, by S. Kawakami et al. A simplified cross-section of a head disclosed in this Japanese document is schematically shown in Fig. 1.

A substrate 52 of soft magnetic material has a cut-away portion which is filled subsequently with non-magnetic insulating material 55. The substrate 52 with the filling material 55 forms a slider of the magnetic head. A thin film spiral coil 53 is formed on a side surface of the substrate 52, insulated from the substrate by an insulating layer 54, and a main magnetic pole 51 of soft magnetic material is formed on a front portion thereof. A protective layer 56 covers the entire surface.

In this example the main magnetic pole 51 forms a single magnetic enclosure with the substrate 52 and a recording medium 2, interlinking the spiral coil 53.

In an effort to meet requirements for improved recording density in a recording medium and for enhanced resolution in the reproduction of information therefrom, another kind of perpendicular magnetic head has been proposed, as disclosed in U.S. Patent No. 4 546 398, by J. Toda et al., issued 8th October 1985.

Figs. 2(a) and 2(b) are, respectively, a plan view and a cross-sectional view of a head disclosed in that patent, the cross-section of Fig. 2(b) being taken along the line A-A in Fig. 2(a). A magnetic head 1 comprises a non-magnetic substrate 11 and a thin film main magnetic pole 12 formed thereon. An insulating layer 13 is further formed thereon, in which layer a thin film excitation coil 14 having a spiral configuration is buried. An auxiliary magnetic pole 15 is formed on the insulating layer 13 and a protection layer 16 covers over the entire surface.

A recording medium 2 has a laminated structure comprising a base layer 21, an underlying layer 22, and a recording layer 23. The underlying layer 22 is of soft magnetic material having a high permeability, and the recording layer 23 is of magnetic material having a high coercive force.

The main magnetic pole 12 has a narrow tip portion 121 which serves to concentrate magnetic flux on to a small area on the recording medium 2. The auxiliary magnetic pole 15 has a protruding portion 151 towards and contacting a rear end of the main magnetic pole 12. The excitation coil 14 surrounds the protruding portion 151 and ends of the coil 14 constitute leads 18, and the leads 18 are further connected to external circuitry for signal processing.

When the coil 14 is excited for recording, a substantial part of the generated magnetic flux flows through a magnetic path interlinking the front (lower half) portion of the excitation coil 14. The magnetic path or magnetic enclosure is composed of the main magnetic pole 12, the recording layer 23, the underlying layer 22, the recording layer 23 again, and the front portion of the auxiliary magnetic pole 15. The magnetic flux crosses the gap G₀ (between the head and the recording medium) concentrated by the narrow width of the tip portion 121 of the main magnetic pole, and the strong magnetic field magnetises the recording layer 23 in a perpendicular direction. Next, the magnetic flux extends through the underlying layer 22 of soft magnetic material in a lateral direction and returns to the auxiliary magnetic pole 15 crossing the recording layer 23 again. On the return path, the magnetic flux does not strongly affect the recording layer 23, which causes a pseudo-pulse signal to be provided during read operation, because a tip portion 152 of the auxiliary magnetic pole facing the recording medium has a broad width and is recessed a predetermined extent Dy from the level of a tip portion 121 of the main magnetic pole.

When reproducing information recorded in the recording medium, the recording medium 2 moves close to the main magnetic pole, and transitions of the perpendicular magnetisation of the recording medium cause changes in magnetic flux along the magnetic enclosure as described above, resulting in an induced current flowing through the coil 14, which current is processed to reproduce a signal corresponding to the recorded information.

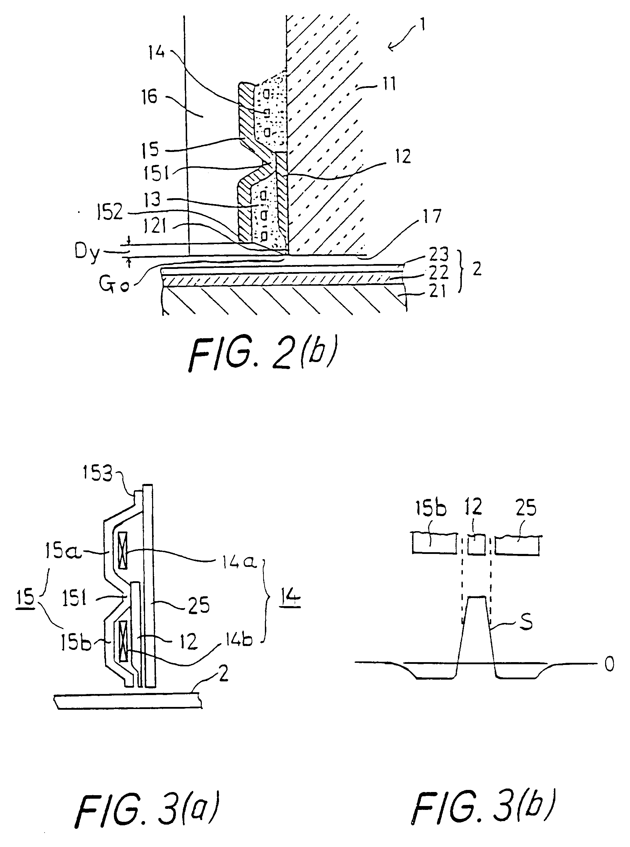

In the structures of magnetic heads of Figs. 1, 2(a) and 2(b), a single conspicuous magnetic enclosure is formed, in other words, a single magnetic gap is formed between two magnetic poles. Although a rear portion of the coil 14, that is an upper half-portion of the coil 14 in Fig. 2(b), is covered by an upper portion of the auxiliary magnetic pole 15, it does not form a conspicuous magnetic enclosure, therefore, it does not much affect magnetic field in the gap G₀.

Further, another type of a thin film magnetic head for perpendicular recording and reproducing is disclosed in U.S. Patent No. 4 404 609, R. E. Jones, Jr., issued 13th September 1983. An arrangement disclosed herein provides two auxiliary magnetic poles, and two magnetic gaps and is in accordance with the preamble of accompanying claim 1. The arrangement enhances magnetising forces at a tip portion of a main magnetic pole and improves recording and reproducing efficiency with respect to the recording medium. A schematic cross-section of the arrangement is shown in Fig. 3(a). The same reference numerals as appear in Figs. 2(a) and 2(b) are used to denote the same or similar parts. 15a and 15b are rear and forward portions of auxiliary magnetic pole 15. 14a and 14b are rear and forward portions of coil 14.

The magnetic head of Fig. 3(a) has a second auxiliary magnetic pole 25, a rear end portion of which contacts a rear end portion 153 of the first auxiliary magnetic pole 15. The widths of the magnetic layers, which constitute the main magnetic pole 12 and first and second magnetic poles 15, 25 are progressively narrower as their distance from a non-magnetic substrate 11 or slider increases. The gaps between the surface of the recording medium 2 and each pole tip are the same. The thickness of the tip portion of the main magnetic pole 12 is made less than the thicknesses of the other two auxiliary poles, for example about 1 micron in comparison with 2.5 to 3 microns.

The configuration of Fig. 3(a) has two distinct magnetic enclosures; the first enclosure starting from contact point 151, passing through main magnetic pole 12, recording medium 2, a front half portion 15b of auxiliary magnetic pole 15, and then returning to the contact point 151 in a clockwise direction; and the second enclosure starting from contact point 151, passing through main magnetic pole 12, recording medium 2, second auxiliary magnetic pole 25, rear half portion 15a of first auxiliary magnetic pole 15, and then returning to the contact point 151 in a counter-clockwise direction. Because current directions interlinking front and rear portions 14a, 14b of coil 14 are opposite, the magnetic fields generated in the common gap (the gap common to both the above-mentioned magnetic enclosures) between the tip of the main magnetic pole 12 and the recording medium 2 work additively. On the other hand, the directions of magnetic force induced at the tip portions of the first and second auxiliary poles are in a reversed direction as compared with that of the main magnetic pole.

The configuration of Fig. 3(a) has an advantage in that the magnetising force in the recording medium at the tip portion of the main magnetic pole 12 is remarkably enhanced by the existence of the second auxiliary magnetic pole.

When a magnetic head of this type is used, the signal generated during reproducing operation can be reshaped for example to a signal having a shape S as shown in Fig. 3(b). The signal S has a single positive pulse part, and has leading and trailing negative pulse parts. The signal S can be sensed as a single narrow pulse by prior art technology similar to the output of the single gap two-pole thin film transducer for longitudinal recording.

When the structures of the magnetic head as discussed above and disclosed in the Japanese or U.S. documents are utilised, it is found that edge noises generated during reproducing by auxiliary poles cannot be neglected, which results in deterioration of recording and reproducing efficiency.

JP-A-62-36714 discloses a thin film magnetic head in which a groove is cut into a magnetic substrate and filled with a non-magnetic material. This reduces the concentration of magnetic flux at the tip part of an auxiliary magnetic pole constituted by the magnetic substrate.

According to the present invention, there is provided a thin film magnetic head for perpendicular recording information on and reproducing information from a recording medium, the magnetic head comprising:-
a first thin magnetic film for recording and reproducing, a tip of a forward portion thereof being intended for arrangement close to or in contact with the recording medium;
a conductive thin film coil disposed to one side of said first thin magnetic film, adjacent to and substantially parallel to a plane thereof, the coil being centered at a rear end portion of said first thin magnetic film;
a second thin magnetic film disposed adjacent to and substantially parallel to said coil, extending over forward and rear portions of said coil, a centre portion of the second thin magnetic film contacting the rear end portion of said first thin magnetic film; and
an auxiliary magnetic pole disposed to another side of said first thin magnetic film, a tip of a forward portion of the auxiliary magnetic pole forming a flat surface with the tip of said first thin magnetic film and facing the recording medium, and the auxiliary magnetic pole being contacted by a rear end portion of the second thin magnetic film;
characterised in that:-
said first and second magnetic films and said auxiliary magnetic pole are arranged such that magnetic resistances of substantially the same magnitude are given to first and second opposing magnetic paths within said head when in use, the first magnetic path being formed around a first magnetic enclosure interlinking with said coil and including the tip of the forward portion of the auxiliary magnetic pole, the forward portion of the auxiliary magnetic pole, the first thin magnetic film through a distributed magnetic leakage path, the forward portion of the second thin magnetic film, and the recording medium in place when the head is in use, and the second magnetic path being formed around a second magnetic enclosure interlinking with said coil and including the tip of the forward portion of the auxiliary magnetic pole, the auxiliary magnetic pole, the rear portion of the second thin magnetic film, the first thin magnetic film, and the recording medium in place when the head is in use, whereby when the magnetic head is excited a balance of magnetic fluxes induced at the tip of the forward portion of the auxiliary magnetic pole and flowing respectively through the first and second magnetic enclosures is provided, those fluxes being equal but opposite in direction to one another.

An embodiment of the present invention can provide a thin film magnetic head for perpendicular recording and reproducing which has a high recording and reproducing capability.

An embodiment of the present invention can provide a thin film magnetic head which can generate a large magnetising force on to a recording medium in the region of a main magnetic pole, but which provides reproduction accompanied by reduced or minimum edge noise at regions of auxiliary magnetic poles.

An embodiment of the present invention can provide a thin film magnetic head which can easily be fabricated by thin film technology.

An embodiment of the present invention can provide a thin film magnetic head which can afford a high recording density and a high resolution in reproduction, minimising edge noise, and which can be easily fabricated.

A magnetic head in accordance with an embodiment of the present invention comprises a main magnetic pole of thin film; a spiral coil of thin film disposed adjacent to and substantially parallel to a plane of the main magnetic pole, the centre of the coil being arranged at a rear end portion of the main magnetic pole; a first auxiliary magnetic pole disposed adjacent to and substantially parallel to a plane of the coil, the centre portion thereof contacting with the rear end portion of the main magnetic pole; and a second auxiliary magnetic pole disposed on another side of the main magnetic pole, a rear end portion of the first auxiliary magnetic pole contacting with the second auxiliary magnetic pole. Further, the arrangement of the above component parts is such that induced magnetic fluxes flowing through first and second magnetic enclosures are substantially equal and opposite in direction to each other, wherein the first magnetic enclosure comprehends the tip portion of the second auxiliary magnetic pole, a front portion of the second auxiliary magnetic pole, the main magnetic pole through a distributed leakage path, a front portion of the first auxiliary magnetic pole, and a recording medium, and the second magnetic enclosure comprehends the tip portion of the second auxiliary magnetic pole, the second auxiliary magnetic pole, a rear portion of the first auxiliary magnetic pole, the main magnetic pole, and the recording medium.

The present invention is based upon the insight, by the inventors, that a distributed leakage path between the main magnetic pole and the second auxiliary magnetic pole forms an independent magnetic enclosure which plays an important role in a magnetic head having two auxiliary magnetic poles. This magnetic enclosure or circuit has been entirely unrecognised in the prior art. When the first and second auxiliary magnetic poles are arranged asymmetrically with regard to the main magnetic pole such that the distance between the main magnetic pole and the second auxiliary magnetic pole is made larger and selected to have a predetermined value in accordance with an embodiment of the present invention, the magnetic fluxes induced in two magnetic enclosures, each interlinking the coil, cancel each other, resulting in the generation of almost no edge noise due to the second auxiliary pole.

Reference is made, by way of example, to the accompanying drawings, in which:-
Fig. 1 shows a schematic cross-section of a prior art thin film magnetic head having a main magnetic pole and a soft magnetic substrate,
Figs. 2(a) and 2(b) are, respectively, a plan view and a cross-sectional view of another prior art thin film magnetic head having a main magnetic pole and a single auxiliary pole of thin film,
Fig 3(a) is a schematic cross-sectional view of still another prior art thin film magnetic head having a main magnetic pole and two auxiliary magnetic poles of thin film disposed on two sides of the main magnetic pole,
Fig. 3(b) illustrates a signal pulse shape obtained when the magnetic head of Fig. 3(a) is used for reproducing,
Fig. 4 is a schematic cross-sectional view of a thin film magnetic head structure utilised in an embodiment of the present invention, this Figure serving to assist in explanation of principles behind the present invention,
Fig. 5(a) and 5(b) are, respectively, a schematic cross-sectional view and a signal response curve pertaining to the structure of Fig. 4 when a distance Ds between a main magnetic pole and second auxiliary magnetic pole is small, whereby a magnetic enclosure PAS₁ interlinking a spiral coil predominates the edge noise,
Fig. 6(a) and 6(b) are, respectively, a schematic cross-sectional view and a signal response curve pertaining to the structure of Fig. 4 when the distance Ds is comparatively large, whereby a magnetic enclosure PAS₂ interlinking the spiral coil predominates the edge noise,
Figs. 7(a) and 7(b) are, respectively, a plan view and a cross-sectional view of an embodiment of the present invention,
Fig. 8 shows curves of distance Ds versus edge noise to main signal pulse ratio for magnetic heads in accordance with the present invention and the prior art,
Figs. 9(a) and 9(b) are, respectively, a plan view and a cross-sectional view of another embodiment of the present invention, and
Figs. 10(a), 10(b) and 10(c) are schematic cross-sectional views showing examples of means for adjustment of magnetic resistance along magnetic enclosures which can be employed in embodiments of the present invention.

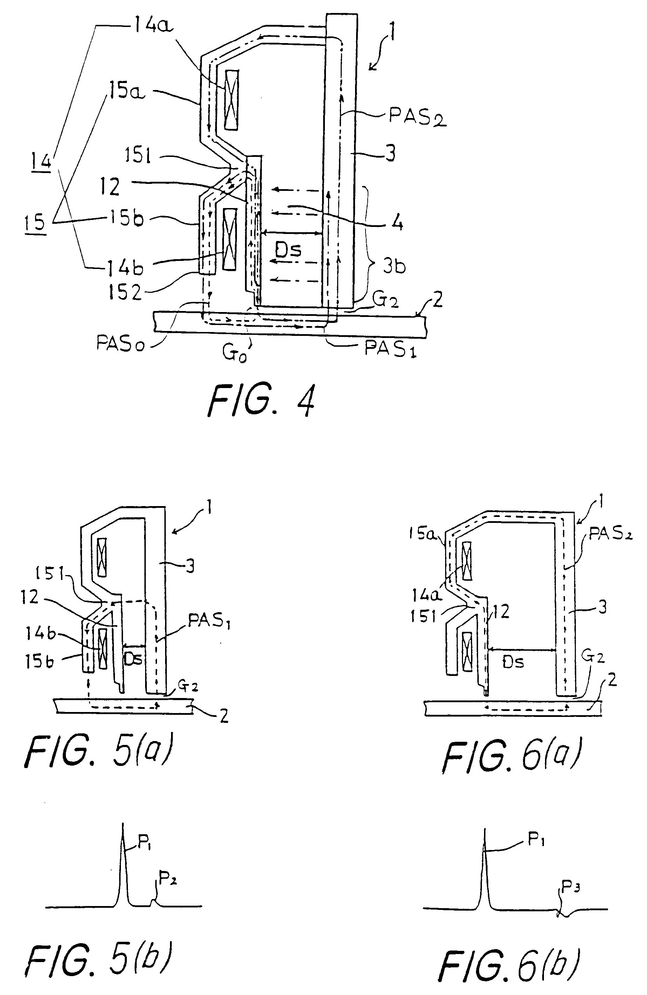

Fig. 4 is a cross-sectional view illustrating basic configuration of a thin film magnetic head in accordance with an embodiment of the present invention, for the purpose of explaining principles thereof. The same reference numerals as in Figs. 1 to 3 are used in Fig. 4 to indicate the same or like parts.

An auxiliary magnetic pole 15 of thin film is provided and the centre portion 151 thereof is in contact with a rear end portion of a main magnetic pole 12. Another auxiliary magnetic pole 3 is provided on an opposite side of the main magnetic pole 12, and the rear ends of the two auxiliary magnetic poles contact each other.

Herein, the auxiliary magnetic pole 15 will be called the first auxiliary magnetic pole and the other auxiliary magnetic pole 3 will be called the second auxiliary magnetic pole.

The second auxiliary magnetic pole 3 may be a substrate of soft magnetic material or a layer of soft magnetic material formed on a substrate of non-magnetic material. The substrate has, in either case, the function of a slider which maintains the magnetic head 1 close to or contacting recording medium 2. A spiral coil 14 of thin film is formed surrounding the contact region 151. The first auxiliary magnetic pole 15 is formed in such a manner as to cover the spiral coil 14 with a thin layer of non-magnetic insulating material (not shown) sandwiched between pole 15 and coil 14. In Fig. 4, space enclosed by the first and second auxiliary poles 15 and 3 is assumed to be filled with a non-magnetic insulating material 4.

Relative movement between head and recording medium 2 takes place with the medium in contact with or close to front tips of both the main magnetic pole 12 and second auxiliary magnetic pole 3. On the other hand, the front tip 152 of the first auxiliary pole is maintained at a short distance from the surface of the recording medium 2. The main magnetic pole 12 and first and second auxiliary magnetic poles 15 and 3 are of soft magnetic material, and the recording medium also comprises a magnetic layer; therefore, magnetic enclosures, in other words, magnetic circuits are formed.

Three magnetic enclosures, which interlink with coil 14, play an important role during operation of the magnetic head.

The first magnetic enclosure is formed by a closed circuit which is denoted as PAS₀, including a gap G₀ (between main pole and recording medium), the main magnetic pole 12, the contact region 151, a front half 15b of the first auxiliary magnetic pole 15, and the recording medium 2.

The second magnetic enclosure is formed by a closed circuit PAS₁ including a gap G₂ (between second auxiliary pole and recording medium), a front half 3b of the second auxiliary magnetic pole 3, a distributed leakage path to the main magnetic pole 12, the contact region 151, a front half 15b of the first auxiliary magnetic pole 15, and the recording medium 2.

The third magnetic enclosure is formed by a closed circuit PAS₂ including the gap G₂, the second auxiliary magnetic pole 3, a rear portion 15a of the first auxiliary magnetic pole 15, the contact region 151, the main magnetic pole 12, (gap G₀) and the recording medium 2.

The magnetic flux interlinking the coil 14 and passing through the gap G₀ between the main magnetic pole 12 and the recording medium 2 plays a main function in recording or reproducing during operation of the head. The directions of the magnetic enclosures PAS₀ and PAS₂ crossing the gap G₀ are assumed to be opposite. The directions of the coil currents flowing through the coil 14 which interlinks the two magnetic enclosures PAS₀ and PAS₂ are also opposite with regard to (through) the surface of the sheet on which the Figure is drawn. Therefore, the magnetic fluxes caused by the coil currents and flowing through two magnetic enclosures work additively at the gap G₀ and contribute to enhance recording efficiency of the magnetic head. The similar effect can be expected in enhancing reproducing efficiency.

The provision of the second auxiliary magnetic pole 3, on the other hand, has a demerit in that edge noises are generated in reproducing operation of the head by a magnetic transition of the recording medium moving at the gap G₂.

The magnetic flux induced at the gap G₂ between the second auxiliary magnetic pole 3 and the recording medium 2 during reproducing operation, will now be considered.

The directions of the magnetic enclosures PAS₁ and PAS₂ are assumed in the same counter-clockwise directions as shown in Fig. 4. Because two magnetic enclosures interlink a front portion 14b and rear portion 14a of the coil 14 respectively in which the induced coil currents flow in opposite directions with regard to (through) the surface of the sheet on which the Figure is drawn, the effects caused by two magnetic enclosures work subtractively.

In the prior art head of Fig. 3(a), a distance Ds between the main magnetic pole 12 and the second auxiliary magnetic pole 3 is very small in a design of the magnetic head, and the leakage path between the second auxiliary magnetic pole 3 and the main magnetic pole 12 forming the magnetic enclosure PAS₁ has not been recognised or considered.

With the insight provided by the inventors it is clear that, when Ds is very small, the effect of PAS₁ predominates over that of PAS₂ because of a low magnetic resistance in the leakage path corresponding to Ds. When magnetic flux is induced at the tip of the second auxiliary magnetic pole by a transition of magnetization in the recording medium 2 in reproducing operation, the induced magnetic flux is sensed as edge noise generated along the PAS₁ which interlinks the coil 14b. This results in deterioration of reproducing efficiency.

Fig. 5(a) gives a schematic cross-sectional illustration of the above case, and Fig. 5(b) shows a signal response curve obtained when the magnetic head of Fig. 5(a) is used for reproducing. Pulse P₁ is a main signal pulse generated by a magnetic transition in the recording medium, and P₂ is an edge noise pulse, having the same polarity as the main pulse arising due to the effects of magnetic enclosure PAS₁.

When the distance Ds is selected to be large, such as is shown in the schematic cross-section of Fig. 6(a), a magnetic resistance of PAS₁ increases, especially over the leakage path between the second auxiliary magnetic pole 3 and the main magnetic pole 12. This being so, the magnetic flux along the magnetic enclosure PAS₂ predominates in interaction between the coil 14a and a magnetic transition of the recording medium 2. The signal response curve obtained when the head of Fig. 6(a) is used is shown in Fig. 6(b), in which an edge noise pulse P₃ exhibits reversed polarity with regard to the main signal pulse P₁.

In an embodiment of the present invention, the effects of magnetic flux due to two magnetic enclosures PAS₁ and PAS₂ are selected to be essentially equal but opposite in polarity, which is achieved by choosing the distance Ds to be sufficiently large and to have a predetermined value. Edge noise effects due to respective magnetic enclosures PAS₁ and PAS₂ cancel each other out and overall edge noise can be reduced or minimised. Minimum edge noise can be achieved by selectively choosing distance Ds as described above; in other words, by selectively determining the magnetic resistance (magnetic reluctance) along the enclosures PAS₁ and PAS₂. The magnetic reluctance change may be achieved in embodiments of the invention by various means, for instance by a change of magnetic head structure such as a change of distance Ds, thickness of magnetic poles, permeability of soft magnetic material, etc.

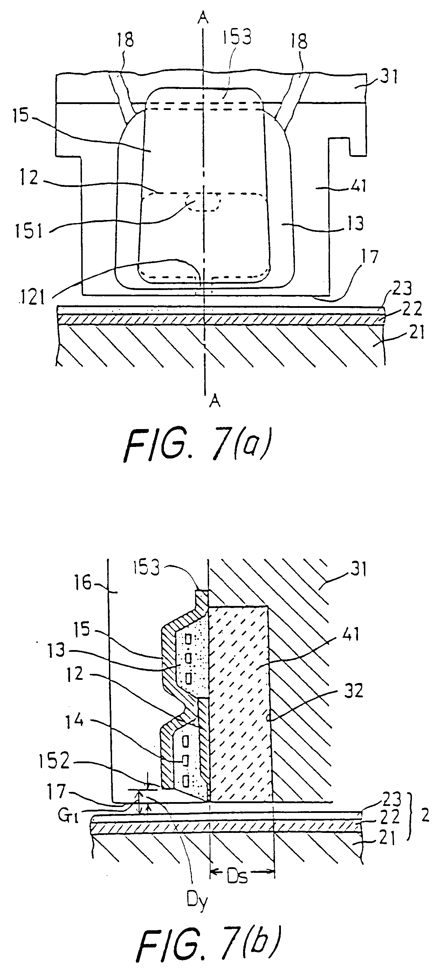

Figs. 7(a) and 7(b) are respectively a plan view and a cross-section, taken along the line A-A of Fig. 7(a), of a magnetic head according to an embodiment of the present invention. A substrate 31 is of soft magnetic material such as of NiZn or MnZn ferrites. The substrate 31 has two functions, acting as the second auxiliary magnetic pole previously explained and as a slider for floating the magnetic head. The substrate 31 has a cut-away portion 32 which is filled with non-magnetic insulating material 41. The cut-away portion 32 has a depth ranging from 20 to 100 microns, preferably in the range 60 to 80 microns, in a horizontal direction as seen in Fig. 7(b). As the non-magnetic insulating material, low melting point glass or silicon dioxide (SiO₂) may be used. The above depth or the thickness of the buried non-magnetic material, defines the distance Ds between the main magnetic pole 12 and the second auxiliary magnetic pole 31.

The main magnetic pole 12 is formed on a surface of the buried non-magnetic material 41, and has a thickness of about 3 to 5 microns except for a tip portion 121 thereof where the thickness is made smaller, about 0.2 to 0.5 microns, and a width thereof is made narrower, for example about 10 microns. The magnetic material used for the main pole 12 may be any of permalloy (NiFe alloy), CoZr alloy, etc. A spiral coil 14 is disposed above the main magnetic pole 12 and has a thickness of about 2 to 3 microns, and is buried in an intermediate insulating layer 13. The spiral coil 14 is made of electrically conductive material such as copper or aluminium thin film, and the centre of the coil is disposed at a rear end of the main magnetic pole 12. The spiral coil 14 can be formed in a double-layer structure or, in some cases, in a multi-layer structure.

A first auxiliary magnetic pole 15 made of thin film having a thickness of 3 to 5 microns is formed above the coil 14, having the intermediate insulating layer 13 therebetween. The first auxiliary magnetic pole 15 has a distance from the main magnetic pole 12 of about 10 to 20 microns for a single or double-layer structure of the spiral coil 14. The distance increases to about 50 microns in the case of a four-layer structure of the spiral coil. A soft magnetic material such as permalloy or CoZr alloy is used for the first auxiliary magnetic pole 15. The tip portion 152 thereof is not at the same level as the tip of the main magnetic pole 12. The gap G₁ to the recording medium 2 of the first auxiliary magnetic pole 15 is larger than that of the main magnetic pole. The recess dimension Dy in Fig. 7(b) is selected to be in the range 10 to 20 microns. The centre portion 151 protrudes or intrudes towards the rear end portion of the main magnetic pole 12 and contacts that end portion. Further, the rear end portion 153 of the first auxiliary magnetic pole 15 is made to contact the substrate 31 of soft magnetic material. Finally, a protective layer 16 of SiO₂ or Al₂O₃ is formed covering the entire surface.

In fabrication of the above magnetic head, sputtering, photolithography and other technologies of the prior art can be utilised. Front tip surface 17 of the whole assembly facing recording medium 2, including the protective layer 16, the main magnetic pole 12, and the substrate 31 with the buried non-magnetic insulating material 41, is polished flat. The surface 17 works as a floating surface (an air-bearing surface of the floating magnetic head) which contributes to the maintenance of a precise gap to a recording medium. The tip portion 121 of the main magnetic pole and the end surface of the substrate 31 are on the same level, but the tip portion 152 of the first auxiliary magnetic pole is buried in the protective layer 16 and has a recess dimension Dy from the tip surface 17. The provision of the recess Dy (though not essential to the present invention) contributes to the minimisation of another kind of edge noise, caused by the first auxiliary magnetic pole. Thus, a magnetic head with reduced or minimum edge noises can be obtained, resulting in enhancing recording and reproducing efficiencies.

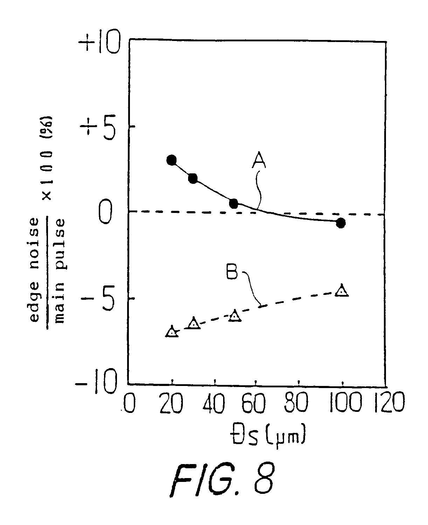

Fig. 8 shows data illustrating edge noise to main pulse ratio, expressed as a percentage, for a magnetic head as in Figs. 7. In Fig. 8, the abscissa indicates distance Ds between the main magnetic pole 12 and the side surface 32 of the substrate 31. Curve A is provided by computer simulation for changing distances Ds. Curve A crosses the edge noise ratio zero level in a Ds range of about 60 to 80 microns. When Ds is below this range, edge noise shows a positive polarity such as is indicated in Fig. 5(b), and when Ds is above this range, it shows a negative polarity as indicated in Fig. 6(b). The above data indicates that edge noise almost vanishes when the filled portion with the non-magnetic insulating material 41 in Fig. 7(b) has the depth (Ds) of about 60 to 80 microns. However, the Ds value satisfying the cancellation condition varies in a range from 20 to 100 microns depending on other features of the magnetic structure of the magnetic head, which features include thickness, width, permeability, etc., of the main magnetic pole, and the first and second auxiliary magnetic poles.

Curve B of Fig. 8 shows data taken in the similar way for a magnetic head of the prior art as shown in Fig. 1. The edge noise has a negative polarity and shows a much greater magnitude than that of curve A. To reduce the edge noise of the prior art head of Fig. 1, it is known that it is effective to remove a corner portion 521 (see Fig. 1) of the substrate 52 which contacts with non-magnetic material 55 and faces recording medium 2. However, edge noise cannot be made to disappear, and fabrication of the magnetic head having such a cut-away portion of the substrate 52 is a difficult process.

As explained above, the thin film magnetic head of the embodiment of the present invention described above has features of high recording density and high reproducing efficiency without edge noise, and the fabrication thereof is easy. Further, magnetic disturbances induced by external parts or circuits are absorbed in the soft magnetic material of the substrate 31 in Fig. 7(b), and therefore such magnetic disturbances do not affect the functions of the main magnetic pole 12. However, substrate materials such as NiZn ferrite or MnZn ferrite are inferior to other thin soft magnetic materials used, in terms of high frequency characteristics.

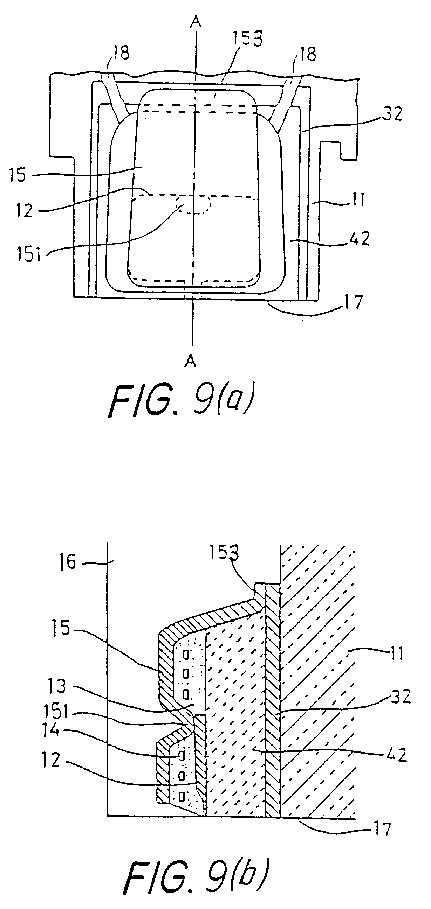

In order to further improve recording and reproducing efficiencies for high-speed operation, at frequencies such as several tens of MHz, a further embodiment of the present invention, as next explained, may be employed. This embodiment is shown in Figs. 9(a) and 9(b), and can solve the above problem in high-speed operation. A particular feature of this embodiment is that a second auxiliary magnetic pole 32 is made of a thin film of soft magnetic material, having a superior characteristic in terms of high-speed (high-frequency) operation, formed on a non-magnetic substrate 11. The substrate 11 works as a slider of the floating magnetic head. Fig. 9(a) is a plan view and Fig. 9(b) is a cross-sectional view taken along the line A-A of Fig 9(a).

The substrate 11 is made of non-magnetic material such as Al₂O₃.TiC, and the thin soft magnetic film 32 of permalloy or CoZr is deposited on the substrate 11 by a sputtering method, and the thin magnetic film 32 functions as the second auxiliary magnetic pole 3 of Fig. 4. The thickness of the thin magnetic film 32 is about 3 to 5 microns which is similar to the thickness of the first auxiliary magnetic pole 15. A non-magnetic insulating layer 42, of SiO₂ or Al₂O₃, is formed covering a substantial part of the second auxiliary magnetic pole 32 and the thickness of this layer defines the distance Ds. On a surface of the non-magnetic insulating layer 42, a main magnetic pole 12, an intermediate insulating layer 13, a thin film coil 14, and a first auxiliary pole 15 are formed in order. The structures of the main magnetic pole 12, the thin film coil 14, and the first auxiliary magnetic pole 15 are formed in ways similar to those used for embodiments of Figs. 7. Therefore, the distance Ds and the shape and disposition of the first auxiliary magnetic pole 15 with regard to the main magnetic pole 12 are arranged in a similar way. However, a rear end portion 153 of the first auxiliary magnetic pole 15 is made to contact with an exposed rear end portion of the second auxiliary magnetic pole 32. A protective layer 16 covers the entire head assembly.

By using the structure of Figs. 9, in which the second auxiliary magnetic pole 32 of thin soft magnetic film is formed on the non-magnetic substrate 11, superior high efficiency can be obtained in recording and reproducing, again without, or with reduced, edge noise.

In the above explanation of embodiments of the invention, proper selection of the distance Ds between the main magnetic pole and the second auxiliary magnetic pole has been emphasised. However, in embodiments of the invention, other means or methods may be used to provide that magnetic resistance along the path PAS₁ is substantially equal to that along the PAS₂. Many modifications are possible as a means to satisfy the cancellation condition, in which any features of magnetic pole configuration, thickness and materials, etc., may be changed.

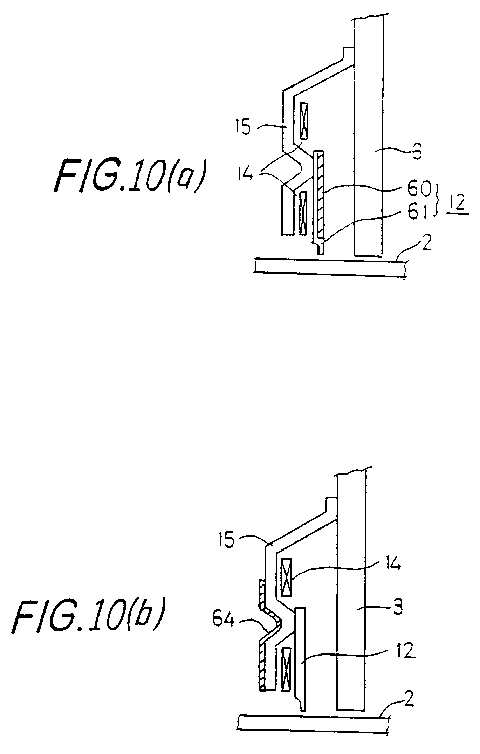

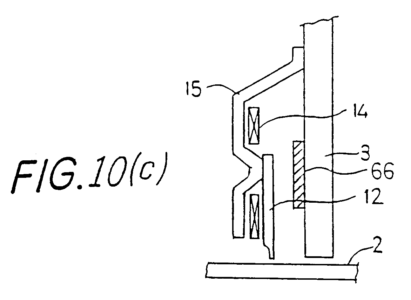

Three possibilities are shown in Figs. 10(a), 10(b) and 10(c). Fig. 10(a) shows a configuration where the main magnetic pole 12 is composed of a double layer 60, 61, each layer having a different permeability. Fig. 10(b) shows an additional magnetic layer 64 added to adjust a magnetic resistance along the magnetic enclosures. Fig. 10(c) shows an additional magnetic layer 66 added to the auxiliary magnetic pole 3 to adjust a magnetic resistance along the magnetic enclosures.

An embodiment of the present invention provides a thin film magnetic head for perpendicular recording and reproducing, the magnetic head comprising a main magnetic pole of thin film, a spiral coil of electrically conductive film disposed on a side of the main magnetic pole, a first auxiliary magnetic pole of thin film covering the coil, and a second auxiliary magnetic pole disposed on another side of the main magnetic pole, forming a substrate or being formed on a non-magnetic substrate. It has been made clear above that a distributed magnetic leakage path between the main magnetic pole and the second auxiliary magnetic pole plays an important role in head operation. When the second auxiliary magnetic pole is properly arranged according to the invention, edge noises due to magnetic fluxes generated at the second auxiliary magnetic pole by a magnetic transition of the recording medium, each magnetic flux flowing through two magnetic enclosures and interlinking the coil, are cancelled with one another and minimised. The low edge noise characteristic contributes to enhance recording and reproducing efficiency of the thin film magnetic head.

## Claims

1. A thin film magnetic head (1) for perpendicular recording information on and reproducing information from a recording medium (2), the magnetic head comprising:-
a first thin magnetic film (12) for recording and reproducing, a tip of a forward portion thereof being intended for arrangement close to or in contact with the recording medium (2);
a conductive thin film coil (14) disposed to one side of said first thin magnetic film (12), adjacent to and substantially parallel to a plane thereof, the coil being centered at a rear end portion of said first thin magnetic film;
a second thin magnetic film (15) disposed adjacent to and substantially parallel to said coil (14), extending over forward (14b) and rear (14a) portions of said coil, a centre portion (151) of the second thin magnetic film contacting the rear end portion of said first thin magnetic film (12); and
an auxiliary magnetic pole (3) disposed to another side of said first thin magnetic film (12), a tip of a forward portion of the auxiliary magnetic pole forming a flat surface with the tip of said first thin magnetic film (12) and facing the recording medium (2), and the auxiliary magnetic pole being contacted by a rear end portion (15a) of the second thin magnetic film (15);
characterised in that:-
said first and second magnetic films (12, 15) and said auxiliary magnetic pole (3) are arranged such that magnetic resistances of substantially the same magnitude are given to first and second opposing magnetic paths within said head when in use, the first magnetic path being formed around a first magnetic enclosure (PAS₁) interlinking with said coil (14) and including the tip of the forward portion of the auxiliary magnetic pole (3), the forward portion of the auxiliary magnetic pole (3), the first thin magnetic film (12) through a distributed magnetic leakage path, the forward portion (15b) of the second thin magnetic film, and the recording medium (2) in place when the head is in use, and the second magnetic path being formed around a second magnetic enclosure (PAS₂) interlinking with said coil (14) and including the tip of the forward portion of the auxiliary magnetic pole (3), the auxiliary magnetic pole (3), the rear portion (15a) of the second thin magnetic film (15), the first thin magnetic film (12), and the recording medium (2) in place when the head is in use, whereby when the magnetic head is excited a balance of magnetic fluxes induced at the tip of the forward portion of the auxiliary magnetic pole (3) and flowing respectively through the first and second magnetic enclosures (PAS₁, PAS₂) is provided, those fluxes being equal but opposite in direction to one another.

2. A thin film magnetic head as claimed in claim 1, wherein the distance between said first thin magnetic film (12) and said auxiliary magnetic pole (3) is selected at a predetermined value such as to establish the said balance of fluxes.

3. A thin film magnetic head as claimed in claim 2, wherein said predetermined value is in the range 20 to 100 microns.

4. A thin film magnetic head as claimed in claim 3, wherein distance between said first and second thin magnetic films (12, 15) is less than 50 microns.

5. A thin film magnetic head as claimed in claim 4, wherein a distance between said first and second thin magnetic films (12, 15) is less than 20 microns, the said coil (14) having a single or double-layer structure.

6. A thin film magnetic head as claimed in any preceding claim, wherein said auxiliary magnetic pole (3) is of thin magnetic film (32), facing said first thin magnetic film (12), formed on a substrate (11) of non-magnetic material.

7. A thin film magnetic head as claimed in any one of claims 2 to 5, wherein said auxiliary magnetic pole (3) is provided by a substrate (31) of magnetic material having a cut-away portion (32) facing said first and second thin magnetic films, said portion being filled with non-magnetic material (41) and arranged such that the depth (D_{S}) thereof, defining a distance between said first thin magnetic film (12) and said auxiliary magnetic pole (3), is selected to have the predetermined value.

8. A thin film magnetic head as claimed in claim 6 or 7, being of a floating head type, a front tip surface of said substrate (11, 31) which confronts the recording medium (2) when the head is in use being flat and forming a slider which maintains the magnetic head close to or in contact with the recording medium (2).

9. A thin film magnetic head as claimed in any preceding claim, wherein said magnetic head further includes additional means (60, 61, 64, 66) for adjusting magnetic resistance of the first (PAS₁) and/or the second (PAS₂) magnetic enclosure.

10. A thin film magnetic head as claimed in any preceding claim, wherein the tips of the forward portions of both said first thin magnetic film (12) and said auxiliary magnetic pole (3) conform to a flat surface (17) to which intermediate material, between those tips, also conforms.

11. A thin film magnetic head as claimed in claim 10, where a tip (152) of a forward portion of said second thin magnetic film (15) is recessed from the said flat surface.

12. A thin film magnetic head as claimed in any preceding claim, wherein the tip of the forward portion of said first thin magnetic film (12), confronting the recording medium (2) when the head is in use, is of small width and thickness.

## Patentansprüche

1. Ein magnetischer Dünnschichtkopf (1) für die senkrechte Aufnahme von Information auf sowie für die Wiedergabe von Information von einem Aufnahmemedium (2), welcher magnetische Kopf umfaßt:
eine erste dünne magnetische Schicht (12) für die Aufnahme und Wiedergabe, wobei eine Spitze eines vorderen Teiles von ihr für eine Anordnung dicht zu oder in Kontakt mit dem Aufnahmemedium (2) vorgesehen wird;
eine leitende Dünnschichtspule (14), die auf der einen Seite der genannten ersten dünnen magnetischen Schicht (12) angeordnet ist, benachbart und im wesentlichen parallel zu einer Ebene von ihr, wobei die Spule bei einem hinteren Endteil der genannten ersten dünnen magnetischen Schicht zentriert ist;
eine zweite dünne magnetische Schicht (15), die benachbart und im wesentlichen parallel zu der genannten Spule (14) angeordnet ist, sich über vordere (14b) und hintere (14a) Teile der genannten Spule erstreckt, wobei ein zentraler Teil (151) der zweiten dünnen magnetischen Schicht den hinteren Endteil der genannten ersten dünnen magnetischen Schicht (12) berührt; und
einen magnetischen Hilfspol (3), der auf einer anderen Seite der genannten ersten dünnen magnetischen Schicht (12) angeordnet ist, wobei eine Spitze eines vorderen Teiles des magnetischen Hilfspoles eine flache Oberfläche mit der Spitze der genannten ersten dünnen magnetischen Schicht (12) bildet und dem Aufnahmemedium (2) gegenüberliegt, und wobei der magnetische Hilfspol durch ein hinteres Endteil (15a) der zweiten dünnen magnetischen Schicht (15) berührt wird, dadurch gekennzeichnet, daß
die genannten ersten und zweiten magnetischen Schichten (12, 15) und der genannte magnetische Hilfspol (3) derart angeordnet sind, daß magnetische Widerstände mit im wesentlichen der gleichen Stärke ersten und zweiten entgegengesetzten magnetischen Pfaden innerhalb des genannten Kopfes gegeben werden, wenn sich dieser in Verwendung befindet, wobei der erste magnetische Pfad um eine erste magnetische Hülle (PAS₁) gebildet wird, die mit der genannten Spule (14) koppelt und die die Spitze des vorderen Teiles des magnetischen Hilfspoles (3) enthält, den vorderen Teil des magnetischen Hilfspoles (3), die erste dünne magnetische Schicht (12) durch einen verteilten magnetischen Leckagepfad, den vorderen Teil (15b) der zweiten dünnen magnetischen Schicht und das Aufnahmemedium (2) an der Stelle, wenn sich der Kopf in Gebrauch befindet, und wobei der zweite magnetische Pfad, der um eine zweite magnetische Hülle (PAS₂) gebildet wird, die mit der genannten Spule (14) koppelt, die Spitze des vorderen Teiles des magnetischen Hilfspoles (3) enthält, den magnetischen Hilfspol (3), den hinteren Teil (15a) der zweiten dünnen magnetischen Schicht (15), die erste dünne magnetische Schicht (12) und das Aufnahmemedium (2) an der Stelle, wenn sich der Kopf in Gebrauch befindet, wodurch wenn der magnetische Kopf angeregt wird, eine Balance der magnetischen Flüsse, die bei der Spitze des vorderen Teiles des magnetischen Hilfspoles (3) induziert worden sind und die jeweils durch die erste und zweite magnetische Hülle (PAS₁, PAS₂) fließen, vorgesehen wird, wobei diese Flüsse gleich, aber in ihrer Richtung entgegengesetzt zueinander sind.

2. Ein magnetischer Dünnschichtkopf, wie er in Anspruch 1 beansprucht worden ist, worin der Abstand zwischen der genannten ersten dünnen magnetischen Schicht (12) und dem genannten magnetischen Hilfspol (3) bei einem vorherbestimmten Wert gewählt wird, um die genannte Balance der Flüsse einzustellen.

3. Ein magnetischer Dünnschichtkopf, wie er in Anspruch 2 beansprucht worden ist, worin der genannte vorherbestimmte Wert sich in dem Bereich zwischen 20 bis 100 Mikrometer bewegt.

4. Ein magnetischer Dünnschichtkopf, wie er in Anspruch 3 beansprucht worden ist, worin der Abstand zwischen den genannten ersten und zweiten dünnen magnetischen Schichten (12, 15) geringer ist als 50 Mikrometer.

5. Ein magnetischer Dünnschichtkopf, wie er in Anspruch 4 beansprucht worden ist, worin ein Abstand zwischen den genannten ersten und zweiten dünnen magnetischen Schichten (12, 15) weniger als 20 Mikrometer beträgt, wobei die genannte Spule (14) eine Einzel- oder Doppelschichtstruktur aufweist.

6. Ein magnetischer Dünnschichtkopf, wie er in einem der vorigen Ansprüche beansprucht worden ist, worin der genannte magnetische Hilfspol (3) aus einer dünnen magnetischen Schicht (32) besteht, welche der genannten ersten dünnen magnetischen Schicht (12) gegenüberliegt, ausgebildet auf einem Substrat (11) aus einem nicht-magnetischen Material.

7. Ein magnetischer Dünnschichtkopf, wie er in einem der Ansprüche 2 bis 5 beansprucht worden ist, worin der genannte magnetische Hilfspol (3) durch ein Substrat (31) eines magnetischen Materials bereitgestellt wird, das ein ausgeschnittenes Teil (32) aufweist, das den genannten ersten und zweiten dünnen magnetischen Schichten gegenüberliegt, wobei der genannte Teil mit einem nicht-magnetischen Material (41) gefüllt ist und derartig angeordnet ist, daß seine Tiefe (D_{S}), die einen Abstand zwischen der genannten ersten dünnen magnetischen Schicht (12) und dem genannten magnetischen Hilfspol (3) definiert, derart ausgewählt wird, daß sie einen bestimmten Wert annimmt.

8. Ein magnetischer Dünnschichtkopf, wie er im Anspruch 6 oder 7 beansprucht worden ist, der vom Typ mit schwimmendem Kopf ist, wobei eine vordere Spitzenoberfläche des genannten Substrates (11, 31), die mit dem Aufnahme-medium (2) konfrontiert wird, wenn sich der Kopf in Gebrauch befindet, flach ist und einen Gleiter bildet, der den magnetischen Kopf dicht bei oder in Kontakt mit dem Aufnahmemedium (2) hält.

9. Ein magnetischer Dünnschichtkopf, wie er in einem der vorigen Ansprüche beansprucht worden ist, worin der genannte magnetische Kopf weiterhin zusätzliche Mittel (60, 61, 64, 66) enthält, um den magnetischen Widerstand der ersten (PAS₁) und/oder der zweiten (PAS₂) magnetischen Hülle zu justieren.

10. Ein magnetischer Dünnschichtkopf, wie er in einem der vorigen Ansprüche beansprucht worden ist, worin die Spitzen der vorderen Teile von sowohl der genannten ersten dünnen magnetischen Schicht (12) als auch des genannten magnetischen Hilfspol (3) mit einer flachen Oberfläche (17) übereinstimmen, mit der Zwischenmaterial, zwischen diesen Spitzen, gleichfalls übereinstimmt.

11. Ein magnetischer Dünnschichtkopf, wie er im Anspruch 10 beansprucht worden ist, in dem eine Spitze (152) eines vorderen Teiles der genannten zweiten dünnen magnetischen Schicht (15) von der genannten flachen Oberfläche ausgenommen ist.

12. Ein magnetischer Dünnschichtkopf, wie er in einem der vorigen Ansprüche beansprucht worden ist, worin die Spitze des vorderen Teiles der genannten ersten dünnen magnetischen Schicht (12), die mit dem Aufnahmemedium (2) konfrontiert wird, wenn sich der Kopf in Verwendung befindet, von kleiner Breite und Dicke ist.

## Revendications

1. Tête magnétique à couche mince (1) pour enregistrement, et reproduction, perpendiculaires d'information sur, et à partir, d'un support magnétique (2), la tête magnétique comprenant :
une première couche mince magnétique (12) d'enregistrement et de reproduction, dont une pointe de la partie avant est destinée à être placée près du support d'enregistrement (2), ou en contact avec celui-ci ;
une bobine en couche mince conductrice (14) disposée d'un côté de ladite première couche mince magnétique (12), adjacente et sensiblement parallèle au plan de celle-ci, la bobine étant centrée au droit de la partie d'extrémité arrière de ladite première couche mince magnétique ;
une seconde couche mince magnétique (15) disposée adjacente et sensiblement parallèle à ladite bobine (14), s'étendant au-dessus des parties avant (14b) et arrière (14a) de ladite bobine, une partie centrale (151) de la seconde couche mince magnétique contactant la partie d'extrémité arrière de ladite première couche mince magnétique (12) ; et
un pôle magnétique auxiliaire (3) disposé de l'autre côté de ladite première couche mince magnétique (12), une pointe de la partie avant du pôle magnétique auxiliaire formant une surface plate avec la pointe de ladite première couche mince magnétique (12) et faisant face au support d'enregistrement (2), et le pôle magnétique auxiliaire étant contacté par la partie d'extrémité arrière (15a) de la seconde couche mince magnétique (15) ;
caractérisé en ce que ;
lesdites première et seconde couches magnétiques (12, 15) et ledit pôle magnétique auxiliaire (3) sont disposés de manière à donner, en utilisation, des résistances magnétiques ayant sensiblement la même valeur à des premier et second trajets magnétiques opposés à l'intérieur de ladite tête ; le premier trajet magnétique étant formé suivant un premier circuit magnétique fermé (PAS₁) interagissant avec ladite bobine (14) et incluant : la pointe de la partie avant du pôle magnétique auxiliaire (3), la partie avant du pôle magnétique auxiliaire (3), la première couche mince magnétique (12) par l'intermédiaire d'un trajet de fuites magnétiques réparties, la partie avant (15b) de la seconde couche mince magnétique, et le support d'enregistrement (2) à l'endroit où la tête est utilisée ; et le second trajet magnétique étant formé suivant un second circuit magnétique fermé (PAS₂) interagissant avec ladite bobine (14) et incluant : la pointe de la partie avant du pôle magnétique auxiliaire (3), le pôle magnétique auxiliaire (3), la partie arrière (15a) de la seconde couche mince magnétique (15), la première couche mince magnétique (12), et le support d'enregistrement (2) à l'endroit où la tête est utilisée, ce par quoi, lorsque la tête magnétique est excitée, il se réalise un équilibre des flux magnétiques induits au droit de la pointe de la partie avant du pôle magnétique auxiliaire (3) et s'écoulant, respectivement, dans les premier et second circuits magnétiques fermés (PAS₁, PAS₂), ces flux étant égaux mais en sens contraires l'un de l'autre.

2. Tête magnétique à couche mince selon la revendication 1, dans laquelle la distance entre ladite première couche mince magnétique (12) et ledit pôle magnétique auxiliaire (3) est fixée à une valeur prédéterminée de manière à établir ledit équilibre des flux.

3. Tête magnétique à couche mince selon la revendication 2, dans laquelle ladite valeur prédéterminée est dans la plage de 20 à 100 microns.

4. Tête magnétique à couche mince selon la revendication 3, dans laquelle la distance entre lesdites première et seconde couches minces magnétiques (12, 15) est inférieure à 50 microns.

5. Tête magnétique à couche mince selon la revendication 4, dans laquelle la distance entre lesdites première et seconde couches minces magnétiques (12, 15) est inférieure à 20 microns, ladite bobine (14) ayant une structure à couche simple ou double.

6. Tête magnétique à couche mince selon l'une quelconque des revendications précédentes, dans laquelle ledit pôle magnétique auxiliaire (3) est fait d'une couche mince magnétique (32) faisant face à ladite première couche mince magnétique (12) formée sur un substrat (11) de matière non magnétique.

7. Tête magnétique à couche mince selon l'une quelconque des revendications 2 à 5, dans laquelle ledit pôle magnétique auxiliaire (3) est constitué par un substrat (31) de matière magnétique ayant une partie supprimée (32) faisant face auxdites première et seconde couches minces magnétiques, ladite partie étant remplie d'une matière non magnétique (41) et disposée de telle manière que sa profondeur (Ds), définissant la distance entre ladite première couche mince magnétique (12) et ledit pôle magnétique auxiliaire (3), soit choisie pour avoir une valeur prédéterminée.

8. Tête magnétique à couche mince selon la revendication 6, ou 7, qui est du type tête flottante, dans laquelle, lorsque la tête est en utilisation, la face de pointe avant dudit substrat (11, 31) qui fait face au support d'enregistrement (2) est plate et forme un patin qui maintient la tête magnétique près du support d'enregistrement (2) ou en contact avec celui-ci.

9. Tête magnétique à couche mince selon l'une quelconque des revendications précédentes, dans laquelle ladite tête magnétique comprend en outre un moyen supplémentaire (60, 61, 64, 66) pour ajuster la résistance magnétique du premier (PAS₁) et/ou du second (PAS₂) circuits magnétiques.

10. Tête magnétique à couche mince selon l'une quelconque des revendications précédentes, dans laquelle les pointes des parties avant, à la fois de ladite première couche mince magnétique (12) et dudit pôle magnétique auxiliaire (3), se conforment à une surface plate (17) à laquelle la matière intermédiaire, entre ces pointes, se conforme également.

11. Tête magnétique à couche mince selon la revendication 10, dans laquelle la pointe (152) de la partie avant de ladite seconde couche mince magnétique (15) est en retrait par rapport à ladite surface plate.

12. Tête magnétique à couche mince selon l'une quelconque des revendications précédentes, dans laquelle la pointe de la partie avant de ladite première couche mince magnétique (12), qui fait face au support d'enregistrement (2) lorsque la tête est en utilisation, a une largeur et d'une épaisseur faibles.
